# EUROPÄISCHE PATENTSCHRIFT

(11) **EP 1 187 747 B1**
(45) Veröffentlichungstag und Bekanntmachung des Hinweises auf die Patenterteilung: **18.01.2006**
(21) Anmeldenummer: 00945728.4
(22) Anmeldetag: 08.06.2000
(51) Int. Cl.: B60T 8/36, F16K 31/06

(54) **ELEKTROMAGNETVENTIL**
ELECTROMAGNETIC VALVE
ELECTROVANNE

(30) Priorität: 08.06.1999 DE 19925935; 26.01.2000 DE 10003204
(43) Veröffentlichungstag der Anmeldung: 20.03.2002
(73) Patentinhaber: Continental Teves AG & Co. oHG, 60488 Frankfurt (DE)
(72) Erfinder: VOLZ, Peter, D-64291 Darmstadt (DE)
(86) Internationale Anmeldenummer: PCT/EP2000/005295
(87) Internationale Veröffentlichungsnummer: WO 2000/074988

(56) Entgegenhaltungen:
- WO-A-97/15771
- DE-A- 3 024 435
- US-A- 5 333 945
- US-A- 5 879 060

## Beschreibung

Die Erfindung betrifft ein Elektromagnetventil nach dem Oberbegriff des Patentanspruchs 1.

Aus der DE 196 03 383 A1 ist ein Elektromagnetventil bekannt geworden, das zur Befestigung des Ventilgehäuses im Ventilaufnahmekörper eine mit einer Clinchkontur versehene Magnetschlußscheibe aufweist, auf der eine Ventilspule mit einem Jochring ruht. Die Magnetschlußscheibe nimmt gleichzeitig das offene Ende eines domförmigen Hülsenteils auf. Der Ventilsitz ist an einem Zylindereinsatz befestigt, der sich bis zu einem Magnetanker in das Hülsenteil erstreckt.

Das Ventilgehäuse besteht demnach aus dem sich in das Hülsenteil erstreckenden Zylindereinsatz und dem daran befestigten Ventilsitz. Infolge der auf das Ventilgehäuse einwirkenden Einpreßkräfte ist der Zylindereinsatz aus einem massiven Drehteil hergestellt.

In der US-A-5 333 945 ist ein Elektromagnetventil der angegebenen Art offenbart, dessen Hülsenteil einen Haltekragen aufweist, wobei das Hülsenteil in einem Überdeckungsbereich mit dem Haltekragen eine Verbindung mit einem Ventilaufnahmekörper einnimmt, in den der Ventilsitz unmittelbar eingesetzt ist. Dies hat den Nachteil, dass das Elektromagnetventil nur dann funktionsfähig ist, wenn der Ventilsitz im Ventilaufnahmekörper befestigt ist und der Haltekragen fest mit dem Ventilaufnahmekörper verbunden ist. Dies ermöglicht keinen Austausch schadhafter Ventile und erhöht den Herstellaufwand, insbesondere zur Überprüfung der Ventilfunktion. Eine Funktionsprüfung des Ventils vor dem Einbau in den Ventilaufnahmekörper ist nicht möglich.

Die Aufgabe der Erfindung ist es, ein Elektromagnetventil der angegebenen Art zu schaffen, welches vorgenannte Nachteile nicht aufweist, das mit möglichst geringem Aufwand herzustellen ist und das über eine einfache Halterung verfügt, wobei die mechanische Beanspruchung des Ventilgehäuses auf ein Minimum begrenzt werden soll.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung mehrerer Ausführungsbeispiele hervor.

Es zeigen:
- Fig. 1: die Darstellung einer ersten Ausführungsform des erfindungsgemäßen Elektromagnetventils im Querschnitt,
- Fig. 2: eine Ausgestaltung des Gegenstandes nach Fig. 1 im Bereich des Ventilsitzes,
- Fig. 3: eine weitere kostengünstige Integration des Ventilsitzes im Ventilgehäuse.

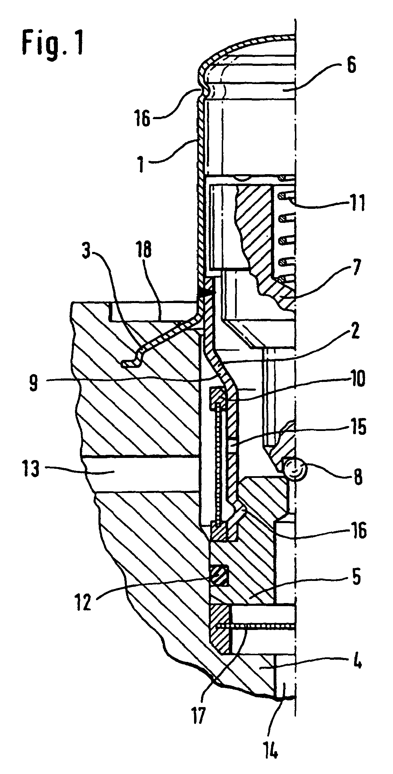

Die Fig. 1 zeigt in erheblich vergrößerter Darstellung einen Längsschnitt durch ein Elektromagnetventil, dessen Ventilgehäuse aus zwei ineinander gefügte, im Tiefziehverfahren hergestellte Hülsenteile 1, 2 besteht, so dass eine eigenständig handhabbare und funktionsfähig vormontierte Ventilbaugruppe gebildet wird, die abbildungsgemäß im unteren, zweiten Hülsenteil 2 einen Ventilsitz 5 und eine Ringdichtung 12 aufnimmt. Die Ventilbaugruppe trägt im abbildungsgemäßen ersten Hülsenteil 1 ein Magnetkernteil 6. Die Ringdichtung 12 verhindert einen Kurzschlußstrom zwischen den beiden Druckmittelkanälen 13, 14 entlang der Wandung zwischen dem Elektromagnetventil und dem Ventilaufnahmekörper 4. Der Ventilsitz 5 als auch das Magnetkernteil 6 sind mittels partieller Einprägungen 16 in den Wandungen der Hülsenteile 1,2 fixiert.

Beide Hülsenteile 1,2 sind mit ihren vom Ventilsitz 5 und dem Magnetkernteil 6 abgewandten Endbereichen abschnittsweise ineinander geschoben und in diesem Überdeckungsbereich von außen mittels einer Laserschweißung unlösbar verbunden. Um das Ventilgehäuse in dem abbildungsgemäßen Ventilaufnahmekörper 4 zu befestigen, weist das äußere, über das zweite Hülsenteil 2 ragende erste Hülsenteil 1 einen Haltekragen 3 auf, der durch eine Außenverstemmung des Werkstoffs des Ventilaufnahmekörpers 4 sicher und auch druckmitteldicht darin befestigt ist. Anstelle der gezeigten Außenverstemmung 18 kann der Haltekragen 3 bei entsprechender Schweißeignung auch am Ventilaufnahmekörper 4 angeschweißt werden.

Das zweite Hülsen teil 2 weist ferner einen Stufenabschnitt 9 auf, so dass in diesem Bereich ein Ringfilter 10 angeordnet werden kann. Durch die Dünnwandigkeit des zweiten Hülsenteils 2 kann dieser Ringfilter 10 sowohl am Außen- wie auch am Innenumfang des Hülsenteils 2 angeordnet werden, wobei bei einer Anordnung im Bereich des Hülsen-Innenumfangs der Ringfilter 10 zusätzlich eine Führungsfunktion für den stößelförmigen Abschnitt am Magnetanker übernehmen kann. Andererseits läßt sich aber auch durch eine entsprechende Verformung (Einschnürung) des Hülsenteils 2 eine derartige Führungsfunktion realisieren.

Ein an der Innenkontur des gestuften Ventilgehäuses angepaßter Magnetanker 7 befindet sich somit beweglich zwischen dem Ventilsitz 5 und dem Magnetkernteil 6 angeordnet, wobei in der Magnetankergrundstellung ein am Magnetanker 7 angebrachtes kugelförmiges Ventilschließglied 8 unter Wirkung einer zwischen dem Magnetkernteil 6 und dem Magnetanker 7 befindlichen Druckfeder 11 druckmitteldicht am Ventilsitz 5 ruht.

Die Druckmittelverbindung über die quer als auch längs zur Ventilachse im Ventilaufnahmekörper 4 angeordneten Druckmittelkanäle 13, 14 sind in der elektromagnetisch stromlos geschlossenen Ventilgrundstellung unterbrochen. In der elektromagnetisch erregten Ventilschaltstellung herrscht eine ungehinderte Druckmittelverbindung über den offenen Ventilsitz 5 und über die in dem zweiten Hülsenteil 2 auf Höhe des Ringfilters 10 befindliche Durchgangsbohrung 15 zwischen den beiden Druckmittelkanälen 13, 14. Die Durchgangsbohrung 15 kann bei Wunsch oder Bedarf als beispielsweise im Prägeverfahren hergestellte Kalibrierbohrung ausgeführt sein und kann somit eine Blendenfunktion erfüllen.

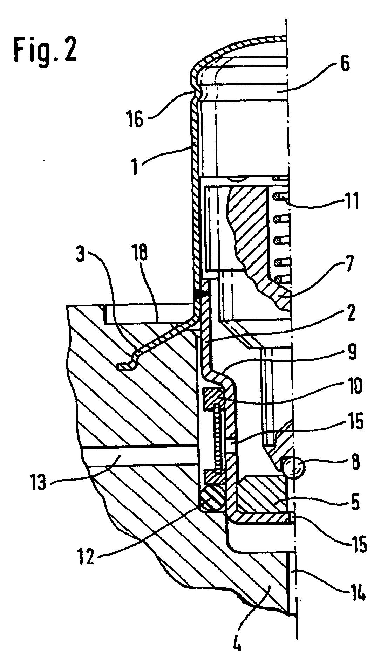

Die Fig. 2 zeigt abweichend von der Ventilausführung nach Fig. 1 nunmehr den Ventilsitz 5 als Ventilplatte ausgeführt innerhalb des zweiten Hülsenteils 2 angeordnet, an dessen Hülsenboden anliegend. Das zweite Hülsenteil 2 ist als tiefgezogener Topf ausgeführt und weist wie im Hülsenmantel nunmehr auch im Hülsenboden eine Durchgangsbohrung 15 auf. Die Ringdichtung 12 ist hierdurch zwischen dem Hülsenmantel, dem Ringfilter 10 und der Stufenbohrung des Ventilaufnahmekörpers 4 positioniert. Bezüglich den übrigen Ventileinzelheiten nach Fig. 2 wird auf die vorangestellten Erläuterungen zu Fig. 1 verwiesen.

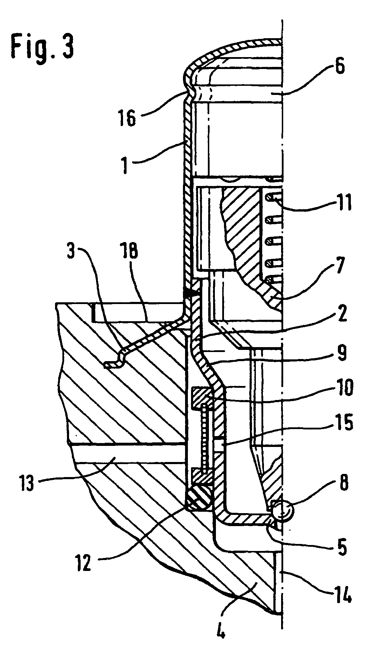

Eine besonders geschickte Integration des Ventilsitzes 5 im zweiten Hülsenteil 2 geht aus Fig. 3 hervor, wonach vorzugsweise mittels eines Prägeverfahrens die Kontur des Ventilsitzes 5 unmittelbar in den Hülsenboden eingelassen ist. Auch die weiteren Ventileinzelheiten nach Fig. 3 entsprechen dem grundlegenden Aufbau der Elektromagnetventile nach Fig. 1 und 2, so dass im einzelnen auch die Beschreibung der Fig. 1 und 2 auf Figur 3 zutreffend ist.

Selbstverständlich können bei Wunsch oder Bedarf die erläuterten Ausführungsbeispiele in ihren Einzelheiten in sinnvoller Weise verändert werden. Hierzu gehört beispielsweise die Möglichkeit, den Ringfilter 12 auf Grund der besonders schlanken, dünnwandigen Hülsenbauweise innerhalb des zweiten Hülsenteils 2 anzuordnen.

Die Innenreinheit des Elektromagnetventils kann auch noch durch die Anordnung eines weiteren Filterelementes im Bereich des Ventilsitzes 5 verbessert werden, so daß durch die platzsparende Bauweise des zweiten Hülsenteils 2 beispielsweise zwischen dem Boden des Ventilaufnahmekörpers 4 und dem Ventilsitz 5 der Zwischenraum von einem Plattenfilter 17 genutzt werden kann.

Die bedeutsamen Gesichtspunkte der Erfindung sind darin zu sehen, dass das Ventilgehäuse 12 durch den gewählten Haltekragen 3 unter geringstem Aufwand unmittelbar im Ventilaufnahmekörper 4 verstemmt befestigt werden kann. Dadurch, dass das gegenüber dem ersten Hülsenteil 1 geringfügig dickere zweite Hülsenteil 2 innerhalb des ersten Hülsenteils 1 gelegen ist, ergibt sich eine optimale Voraussetzung zur Laserschweißung von der Außenfläche des ersten Hülsenteils 1 mit dem zweiten Hülsenteil 2. Durch die gewählte Konstruktion kann für die zweite Hülse 2 auch ein härtbarer Werkstoff verwendet werden, so dass keinerlei Verschleißprobleme für den Ventilsitz 5 auftreten, wenn dieser unmittelbar in den Boden des zweiten Hülsenteils 2 eingebracht ist.

Die Verwendung geringster Wandstärken für beide Hülsenteile 1,2 begünstigt die bestmögliche Auslegung des Magnetkreises.

### Bezugszeichenliste

- 1: Erstes Hülsenteil
- 2: Zweites Hülsenteil
- 3: Haltekragen
- 4: Ventilaufnahmeträger
- 5: Ventilsitz
- 6: Magnetkernteil
- 7: Magnetanker
- 8: Ventilschließglied
- 9: Stufenabschnitt
- 10: Ringfilter
- 11: Druckfeder
- 12: Ringdichtung
- 13: Druckmittelkanal
- 14: Druckmittelkanal
- 15: Durchgangsbohrung
- 16: Einprägung
- 17: Plattenfilter
- 18: Außenverstemmung

## Patentansprüche

1. Elektromagnetventil, mit einem einen Magnetanker (7), einen Magnetkernteil (6), ein Ventilschließglied (8) und einen Ventilsitz (5) aufnehmenden Ventilgehäuse, an dem eine Ventilspule angebracht ist, wobei das Ventilgehäuse aus einem ersten, im Tiefziehverfahren hergestellten Hülsenteil (1) besteht, das in Richtung auf einen Ventilaufnahmekörper (4) mit einem Haltekragen (3) versehen ist, der mit dem Hülsenteil (1) eine eigenständig handhabbare, funktionsfähig vormontierte Baugruppe bildet, wobei das Hülsenteil (1) in einem Überdeckungsbereich mit dem Haltekragen (3) eine Verbindung einnimmt, **dadurch gekennzeichnet, daß** das erste Hülsenteil (1) im Überdeckungsbereich mit einem zweiten Hülsenteil (2), das im Tiefziehverfahren hergestellt ist und den Ventilsitz (5) aufweist, mittels Laserschweißung eine unlösbare Verbindung mit dem ersten Hülsenteil (1) einnimmt.

2. Elektromagnetventil nach Anspruch 1, **dadurch gekennzeichnet, daß** das Ende des ersten Hülsenteils (1), welches über das zweite Hülsenteil (2) gestülpt ist, den Haltekragen (3) aufweist, der in dem für das Elektromagnetventil vorgesehenen Ventilaufnahmekörper (4) form- und/oder kraftschlüssig, vorzugsweise im Ventilaufnahmekörper (4) verstemmt, befestigt ist.

3. Elektromagnetventil nach Anspruch 1 oder 2, **dadurch gekennzeichnet, daß** in dem Endabschnitt des zweiten Hülsenteils (2) der Ventilsitz (5) und im Endabschnitt des ersten Hülsenteils (1) das Magnetkernteil (6) angeordnet ist.

4. Elektromagnetventil nach Anspruch 3, **dadurch gekennzeichnet, daß** der Magnetanker (7) als gestufter, das Ventilschließglied (8) aufweisender Kolben zwischen dem Ventilsitz (5) und dem Magnetkernteil (6) angeordnet ist.

5. Elektromagnetventil nach einem der vorhergehenden Ansprüche 1 bis 3, **dadurch gekennzeichnet, daß** das zweite Hülsenteil (2) einen Stufenabschnitt (9) zur Aufnahme eines Ringfilters (10) aufweist.

6. Elektromagnetventil nach einem der vorhergehenden Ansprüche 1 bis 3, **dadurch gekennzeichnet, daß** das zweite Hülsenteil (2) gegenüber dem ersten Hülsenteil (1) eine größere Wandstärke aufweist.

## Claims

1. Electromagnetic valve, including a magnet armature (7), a magnet core member (6), a valve housing to which a valve coil is fitted and which accommodates a valve closure member (8) and a valve seat (5), with the valve housing being composed of a first sleeve part (1) which is made in a deepdrawing process and, in the direction of a valve-accommodating member (4), includes a retaining collar (3) that forms along with the sleeve part (1) an independent, operatively preassembled module, with the sleeve part (1) establishing a connection in an overlapping area with the retaining collar (3),
**characterized in that** the first sleeve part (1) constitutes an undetachable connection, provided by laser welding, with the first sleeve part (1) in the overlapping area with a second sleeve part (2) which is made in a deepdrawing process and includes the valve seat (5).

2. Electromagnetic valve as claimed in claim 1,
**characterized in that** the end of the first sleeve part (1) that is slipped over the second sleeve part (2) includes the retaining collar (3) which is attached in the valve-accommodating member (4) provided for the electromagnetic valve in a form-locking and/or operative connection, preferably is calked in the valve-accommodating member (4).

3. Electromagnetic valve as claimed in claim 1 or 2,
**characterized in that** the valve seat (5) is arranged in the end portion of the second sleeve part (2) and the magnet core member (6) is arranged in the end portion of the first sleeve part (1).

4. Electromagnetic valve as claimed in claim 3,
**characterized in that** the magnet armature (7) is arranged as a stepped piston including the valve closure member (8) between the valve seat (5) and the magnet core member (6).

5. Electromagnetic valve as claimed in any one of the preceding claims 1 to 3,
**characterized in that** the second sleeve part (2) has a stepped portion (9) for accommodating a ring filter (10).

6. Electromagnetic valve as claimed in any one of the preceding claims 1 to 3,
**characterized in that** the second sleeve part (2) has a larger wall thickness compared to the first sleeve part (1).

## Revendications

1. Electrovanne comportant un induit d'aimant (7), un élément de noyau d'aimant (6), un élément obturateur de vanne (8), et un boîtier de vanne recevant un siège de vanne (5), boîtier sur lequel est montée une bobine d'aimant, le boîtier de vanne se composant d'un premier élément de douille (1) fabriqué par emboutissage et pourvu, du côté du corps (4) de logement de la vanne, d'une collerette de maintien (3), formant avec l'élément de douille (1) un ensemble pouvant être manipulé comme un ensemble séparé, et pré-assemblé prêt à fonctionner, l'élément de douille (1) formant une liaison au niveau de la zone de recouvrement avec la collerette de maintien (3),
**caractérisée en ce que** le premier élément de douille (1) forme, au niveau d'une zone de recouvrement avec un deuxième élément de douille (2) fabriqué par emboutissage et comportant le siège de vanne (5), une liaison indémontable faite par soudage au laser avec le premier élément de douille (1).

2. Electrovanne selon la revendication 1, **caractérisée en ce que** l'extrémité du premier élément de douille (1), qui est emmanchée par-dessus le deuxième élément de douille (2), comporte la collerette de maintien (3) qui est fixée par fixation mécanique et/ou par friction, en étant de préférence sertie dans le corps (4) de logement de la vanne, dans le corps (4) de logement de la vanne prévu pour l'électrovanne.

3. Electrovanne selon la revendication 1 ou 2, **caractérisée en ce que** le siège de vanne (5) est disposé dans la partie terminale du deuxième élément de douille (2), et que l'élément de noyau d'aimant (6) est disposé dans la partie terminale du premier élément de douille (1).

4. Electrovanne selon la revendication 3, **caractérisée en ce que** l'induit d'aimant (7) est réalisé sous forme d'un piston étagé comportant l'élément obturateur (8) de la vanne, disposé entre le siège de vanne (5) et l'élément de noyau d'aimant (6).

5. Electrovanne selon l'une des revendications précédentes 1 à 3, **caractérisée en ce que** le deuxième élément de douille (2) comporte une partie étagée (9) destinée à recevoir une bague filtrante (10).

6. Electrovanne selon l'une des revendications précédentes 1 à 3, **caractérisée en ce que** le deuxième élément de douille (2) présente une épaisseur de paroi plus forte que le premier élément de douille (1).
